# FASCICULE DE BREVET EUROPEEN

(11) **EP 2 750 521 B1**
(45) Date de publication et mention de la délivrance du brevet: **07.08.2019**
(21) Numéro de dépôt: 12773118.0
(22) Date de dépôt: 28.08.2012
(51) Int. Cl.: A23G 3/54, B65D 65/46, A23L 27/30, A23P 30/20, A23L 29/30, A23G 3/42, A23G 9/50

(54) **PROCEDE DE FABRICATION DE MATERIAUX TRANSPARENTS, COMESTIBLES, UTILISABLES COMME RECIPIENTS POUR DES PRODUITS ALIMENTAIRES ET LEURS APPLICATIONS**
VERFAHREN ZUR HERSTELLUNG VON TRANSPARENTEN ESSBAREN MATERIALIEN ZUR VERWENDUNG ALS BEHÄLTNISSE FÜR LEBENSMITTEL SOWIE DEREN ANWENDUNGEN
PROCESS FOR THE PREPARATION OF TRANSPARENT COMESTIBLE MATERIALS, USEFUL AS RECIPIENTS FOR FOOD PRODUCTS AND THEIR APPLICATIONS

(30) Priorité: 30.08.2011 FR 1157645
(43) Date de publication de la demande: 09.07.2014
(73) Titulaire: Bouaziz, Hassouna, 78220 Viroflay (FR)
(72) Inventeur: Bouaziz, Hassouna, 78220 Viroflay (FR)
(74) Mandataire: IPAZ
(86) Numéro de dépôt international: PCT/IB2012/054403
(87) Numéro de publication internationale: WO 2013/030760

(56) Documents cités:
- EP-A1- 0 518 770
- WO-A1-2010/031527
- WO-A2-2004/080192
- DE-A1- 19 709 304
- JP-A- 60 130 342
- US-A- 5 472 733
- US-B1- 6 458 400
- anonyme: "Karamellkörbchen", internet archive wayback machine , 20 septembre 2010 (2010-09-20), XP002677645, Extrait de l'Internet: URL:http://web.archive.org/web/20100920080 639/http://www.chefkoch.de/forum/2,49,2909 27/Karamellkoerbchen.html [extrait le 2012-06-13]
- Lilouina: "Mon colis Science et gourmandise", internet archive wayback machine , 26 mai 2011 (2011-05-26), XP002677646, Extrait de l'Internet: URL:http://web.archive.org/web/20110526103 516/http://recetteslilouina.canalblog.com/ archives/2011/03/09/20585114.html [extrait le 2012-06-13]

## Description

L'invention concerne un procédé de fabrication de matériaux transparents, comestibles, pour l'enrobage, l'emballage ou le support de produits alimentaires, constituant ainsi des récipients pour ces produits.

La plupart des emballages actuels, à l'exception notamment des cornets de glace ou des fonds de tarte, sont jetables et donc polluants. Il s'agit le plus généralement de matériaux plastiques, de cartons, de papiers ou encore de verres, ce qui présente l'inconvénient d'une gestion contraignante tant au niveau de l'hygiène que de la casse.

Les recherches de l'inventeur se sont orientées sur un matériau essentiellement constitué par de l'isomalt, dont les qualités répondent aux critères requis pour les applications envisagées. On rappelle que l'isomalt est un mélange de deux composés, le 1,6-glucopyranosyl-D-sorbitol et le 1,1-glucopyranosyl-D-mannitol, dans les proportions 50/50. Sa synthèse est effectuée à partir du sucrose. Sa commercialisation se fait sous une large gamme en fonction de la taille des particules (Fritzsching, B., 1993. Isomalt, a sugar substitute idéal for the manufacture of sugar-free and calorie reduced confectionery. In: Conference Proceedings-Food Ingredients Europe. Maarssen, the Netherlands, pp. 371-377) : type M (90% des particules : 0.50 - 3.5mm), type F (90% : 200 - 700 µm), type C (90% < 400 µm) et type PF (90% < 100 µm). Lors du processus de cristallisation, le GPM cristallise avec deux molécules d'eau tandis que le GPS cristallise en forme anhydre et en conséquence, l'isomalt contient environ 5% d'eau de cristallisation.

Ce matériau est couramment utilisé dans l'alimentation, en particulier en pâtisserie à des fins de décoration. Il présente notamment l'avantage d'une saveur modérément sucrée, d'une grande stabilité en milieux alcalins ou acides, d'une faible hygroscopicité et d'une résistance élevée aux traitements thermiques, restant transparent même après chauffage, ce qui permet de construire des pièces avec une apparence de verre. Son utilisation dans la préparation de cônes de glace est par exemple décrite dans WO 2004/080192. Son utilisation dans la production de produits de confiserie, tels que des bonbons, est décrite dans les documents US 5,472,733, DE 197 09 304 A1 ou WO 2010/031527.

On mesurera toutefois que des applications comme récipients exigent de disposer d'un produit de haute qualité, transparent, sans bulles dans la masse, ayant un aspect visuel uniforme, ce qui entraîne des contraintes de fabrication.

Les travaux effectués ont permis de mettre au point des conditions permettant de disposer, de manière automatisée et reproductible, d'un matériau présentant les formes adaptées pour servir de récipients aux produits alimentaires les plus divers.

L'invention a donc pour but de fournir un procédé de production automatisé d'un matériau alimentaire essentiellement constitué par de l'isomalt.

Elle vise la production d'une nouvelle génération de matériaux d'emballage ou enrobage alimentaire, pouvant présenter différentes configurations, ce qui permet de mettre à disposition une large gamme de supports, en particulier de petites tailles pour des utilisations dans différents secteurs agro-alimentaires et permettant un visuel immédiat et détaillé (par exemple présence de fruits , inclusions, couleur), tout en conservant le côté croquant.
- Conformément à l'invention,
le procédé de production d'un matériau alimentaire essentiellement constitué par de l'isomalt destine à être utilisé comme récipient pour des produits alimentaires, est caractérisé en ce qu'il comprend les étapes de :
- fusion dans un extrudeur du matériau avec une montée en température allant de 80°C à 160°C, de préférence de 150°C à 160°C,
- tempérage de manière à obtenir le matériau sous sa forme cristalline stable et à éliminer les bulles présentes dans le matériau,
- coulage ou injection dans des moules, dans lequel l'étape de tempérage est réalisée à une température supérieure à la température de fusion de l'isomalt, mais permettant de garder le produit malléable et ductile, ladite étape de tempérage comprenant une étape de chauffage à une température de 160°C pendant 3 minutes, suivi d'une phase de refroidissement à une température de 120°C à 130°C.

L'étape de fusion est réalisée dans un extrudeur. Le temps de chauffage est notamment d'au moins 2 minutes à une dizaine de minutes. Lors de la fusion dans un extrudeur, le matériau introduit se trouve avantageusement ébullé grâce à la pression à l'intérieur de l'extrudeuse et à la détente qui survient et sa température est uniforme.

Le tempérage est effectué à une température supérieure à celle de la fusion, mais permettant de garder le produit malléable et ductile.

Le formage est réalisé à une température supérieure à la température de transition vitreuse de l'isomalt, soit 40°C, notamment de 80 à 95°C par thermoformage par injection, après le passage dans la filière et le découpage des pièces par injection ou par simple coulage dans des moules présentant la forme requise pour l'application envisagée, l'étape de formage étant réalisée à une température constante pour que le matériau traité ait une cristallinité et une teneur en eau uniforme. Les températures ci-dessus permettent de travailler à l'état liquide, sans forte viscosité.

Les conditions, afin d'éviter la formation d'une quantité importante de bulles et un brunissement du produit, comprennent
- une température de chauffage de 160°C
- un temps de chauffage de 3 min
- une température de refroidissement de 120-130°C.

De manière avantageuse, le procédé défini ci-dessus comprend également une étape de vernissage avec vaporisation de vernie alimentaire, en particulier incolore, comme la gomme schellack, dans un tunnel de l'extrudeuse pour protéger le matériau de l'humidité. Le retour à température ambiante du matériau doit être effectué afin de s'assurer que le matériau à base d'isomalt reste stable et non cassant.

Dans un mode de réalisation de l'invention, le matériau mis en oeuvre est constitué par de l'isomalt aromatisé et/ou coloré.

Les dispositions définies ci-dessus, prises seule ou en combinaison, permettent d'obtenir un matériau pouvant présenter différentes configurations, et différentes tailles. Le procédé de l'invention permet notamment de réaliser des emballages de petite taille (formes « mini » et présentant l'avantage de la mise en valeur des contenus grâce à sa transparence. De plus, il s'agit d'un matériau biodégradable.

Ce matériau est particulièrement approprié à recevoir toute sorte de garniture, froide ou glacée, salée ou sucrée. Il peut ainsi servir d'emballage utilisable par les traiteurs et pâtissiers, par les glaciers et dans l'industrie des surgelés, par les cuisiniers et les restaurateurs pour présentation sous diverses formes, tailles laissant libre cours à la création, notamment sous forme de verrines, de canapés et bouchées, coupelles, tulipes, cônes, en particulier mini-cônes, plateaux traiteurs, caissettes et en grande distribution pour utilisation individuelle. Les contenants peuvent être de forme variable, comprenant des formes ovoïdes et en losanges. Dans l'industrie de la crème glacée, une réalisation pratique consiste à enrober des bâtonnets. Les essais de congélation réalisés ont montré le comportement satisfaisant du matériau au froid. Les contenus sont mis en valeur grâce à la transparence des emballages.

L'invention décrit également un récipient pour produit alimentaire tel qu'obtenu par le procédé défini ci-dessus.

De manière avantageuse, outre l'aspect utilitaire, le matériau utilisé selon l'invention ajoute une valeur au produit contenu. Le visuel est immédiat quant au produit, sa structure, sa coloration.

D'autres caractéristiques et avantages de l'invention sont rapportés dans l'exemple qui suit donné à titre illustratif.

### Exemple

On utilise comme matériau de départ de l'isomalt sous forme de billes solides.

### Caractéristiques physico-chimiques de l'isomalt

| Forme commerciale | di-hydraté |
|---|---|
| Poids moléculaire (g/mol) | 355 |
| Pouvoir sucrant | 0.5 |
| Energie disponible (kcal/g) | 2 |
| Solubilité aqueuse (%), 20°C | 25 |
| Solubilité aqueuse (%), 50°C | 55 |
| Brunissement sous la chaleur | Peu important |
| Stabilité au pH | 2-9 |
| Enthalpie de dissolution (cal/g, 25°C) | -9.4 |
| Sensation dans la bouche | Fraîcheur |

Le pouvoir sucrant de l'isomalt est deux fois moindre que celui du saccharose (sucrose). Avantageusement, il est peu calorique (2Kcal/g). Sa solubilité dans l'eau dépend fortement de la température. Contrairement au saccharose dont il provient (synthèse de l'isomalt), il caramélise (brunit) peu lors d'un chauffage intense. Par ailleurs, il est stable aux pH alimentaires.

Dans l'exemple rapporté, les billes d'isomalt sont amenées à l'état liquide par fusion
- dans un cuiseur (cuve de cuisson; ne formant pas partie de l'invention), avec une montée en température jusqu'à 150 - 160C°
- dans une extrudeuse : les billes sont introduites en continu et chauffées jusqu'à 150-160°C. Une ou deux vis sans fin entraînent la masse fondue jusqu'à la filière.

Le produit est alors soumis à un cisaillement et à une pression élevée, ce qui permet l'élimination des bulles.

Avant le formage, le matériau fondu est soumis à une étape de tempérage qui permet d'obtenir le matériau sous sa forme stable et de l'ébuller dans le cas où la fusion a été réalisée dans une extrudeuse ou de parfaire l'élimination des bulles lorsqu'une extrusion a été utilisée.

Cette phase d'extrusion à chaud de l'isomalt permet d'obtenir un produit présentant une température uniforme en sortie. Grâce à la pression à l'intérieur de l'extrudeuse et à la détente qui survient, le matériau obtenu est ébullé de manière satisfaisante.

Le thermoformage a lieu après le passage dans la filière puis on effectue le découpage de la pièce. Ces opérations peuvent également être effectuées simultanément.

En variante, l'isomalt est travaillé après fusion par injection, ce qui implique la maîtrise de la température au cours de l'injection dans le moule pour éviter des cristallinités différentes et compositions en eau différentes.

L'invention fournit ainsi une technique assurant l'obtention d'un produit innovant à base d'isomalt, particulièrement approprié pour servir de support/emballage/enrobages de préparations alimentaires de grande variété.

## Revendications

1. Procédé de production d'un matériau alimentaire essentiellement constitué par de l'isomalt destiné à être utilisé comme récipient pour des produits alimentaires, **caractérisé en ce qu'**il comprend les étapes de :
- fusion dans un extrudeur du matériau avec une montée en température allant de 80°C à 160°C, de préférence de 150°C à 160°C,
- tempérage de manière à obtenir le matériau sous sa forme cristalline stable et à éliminer les bulles présentes dans le matériau,
- coulage ou injection dans des moules,
dans lequel l'étape de tempérage est réalisée à une température supérieure à la température de fusion de l'isomalt, mais permettant de garder le produit malléable et ductile, ladite étape de tempérage comprenant une étape de chauffage à une température de 160°C pendant 3 minutes, suivi d'une phase de refroidissement à une température de 120°C à 130°C.

2. Procédé selon la revendication 1, **caractérisé en ce que** le temps de chauffage est de 2 à 10 minutes.

3. Procédé selon la revendication 1, **caractérisé en ce que**, lors de la fusion dans un extrudeur, le matériau introduit est ébullé grâce à la pression à l'intérieur de l'extrudeuse et à la détente qui survient.

4. Procédé selon l'une quelconque des revendications 1 à 3, **caractérisé en ce que** le formage est réalisé à une température supérieure à la température de transition vitreuse de l'isomalt, soit 40°C, par thermoformage par injection, après le passage dans la filière et le découpage des pièces, ou par simple coulage dans des moules présentant la forme requise pour l'application envisagée, l'étape de formage étant réalisée à une température constante pour que le matériau traité ait une cristallinité et une teneur en eau uniforme.

5. Procédé selon la revendication 4, **caractérisé en ce que** le formage est réalisé à une température de 80 à 95°C.

6. Procédé selon l'une quelconque des revendications 1 à 5, **caractérisé en ce qu'**il comprend également une étape de vernissage avec vaporisation de vernis alimentaire, en particulier incolore.

7. Procédé selon l'une quelconque des revendications 1 à 6, **caractérisé en ce que** le matériau alimentaire essentiellement constitué par de l'isomalt est aromatisé et/ou coloré.

8. Procédé selon l'une quelconque des revendications 1 à 7, **caractérisé en ce que** le matériau obtenu est utilisé comme récipient pour toute sorte de garniture, froide ou glacée, salée ou sucrée.

## Patentansprüche

1. Verfahren zur Herstellung eines im Wesentlichen aus Isomalt bestehenden, essbaren Materials zur Verwendung als Behälter für Nahrungsmittel, **dadurch gekennzeichnet, dass** es die folgenden Schritte aufweist:
- Schmelzen des Materials in einem Extruder mit einem Temperaturanstieg von 80°C bis 160°C, vorzugsweise von 150°C bis 160°C,
- Temperieren, so dass das Material in seiner stabilen kristallinen Form erhalten wird und in dem Material vorhandene Blasen eliminiert werden,
- Gießen oder Spritzen in Formen,
wobei der Schritt des Temperierens bei einer Temperatur erfolgt, die höher als die Schmelztemperatur des Isomalts ist, jedoch ermöglicht, das Material verformbar und duktil zu halten, wobei der Schritt des Temperierens einen Schritt des Erwärmens auf eine Temperatur von 160°C für 3 Minuten aufweist, gefolgt von einer Phase des Abkühlens auf 120°C bis 130°C.

2. Verfahren nach Anspruch 1, **dadurch gekennzeichnet, dass** die Erwärmungszeit zwischen 2 und 10 Minuten beträgt.

3. Verfahren nach Anspruch 1, **dadurch gekennzeichnet, dass** beim Schmelzen in einem Extruder das eingebrachte Material aufgrund des Drucks im Inneren des Extruders und der plötzlich eintretenden Entspannung von Blasen befreit wird.

4. Verfahren nach einem der Ansprüche 1 bis 3, **dadurch gekennzeichnet, dass** das Formen bei einer Temperatur über der Glasübergangstemperatur des Isomalts, nämlich 40°C, durch Spritz-Thermoformen nach dem Eintritt in die Düse und dem Schneiden von Teilen oder durch einfaches Gießen in Formen, welche die für die vorgesehene Anwendung erforderliche Form aufweisen, erfolgt, wobei der Schritt des Formens bei einer konstanten Temperatur durchgeführt wird, damit das verarbeitete Material eine gleichmäßige Kristallinität und einen ebensolchen Wassergehalt aufweist.

5. Verfahren nach Anspruch 4, **dadurch gekennzeichnet, dass** das Formen bei einer Temperatur von 80 bis 95°C erfolgt.

6. Verfahren nach einem der Ansprüche 1 bis 5, **dadurch gekennzeichnet, dass** es ebenfalls einen Lackierungsschritt durch Verdampfen von insbesondere farblosem Lebensmittellack aufweist.

7. Verfahren nach einem der Ansprüche 1 bis 6, **dadurch gekennzeichnet, dass** das im Wesentlichen aus Isomalt bestehende essbare Material aromatisiert und/oder gefärbt wird.

8. Verfahren nach einem der Ansprüche 1 bis 7, **dadurch gekennzeichnet, dass** das erhaltene Material als Behälter für jede Art von Garnitur, sei sie gekühlt oder gefroren, gesalzen oder gezuckert, verwendet wird.

## Claims

1. Method for producing a food material essentially consisting of isomalt for its use as a container for food material, **characterised in that** it includes the steps of:
- melting in an extruder of the material by heating the temperature from 80°C to 160°C, preferably from 150°C to 160°C,
- tempering so as to obtain the material in the stable crystalline form thereof and to eliminate bubbles in the material, and
- pouring or injecting into moulds,
wherein the tempering step is realized at a temperature higher than the melting temperature of the isomalt, but enabling to remain the product in malleable and ductile form, said tempering step comprising a step of heating at a temperature of 160°C for 3 minutes, followed by a cooling step at a temperature of 120°C to 130°C.

2. Method according to claim 1, **characterised in that** the heating time is from 2 to 10 minutes.

3. Method according to claim 1, **characterised in that**, when the melting is carried out in an extruder, bubbles are eliminated from the introduced material thanks to pressure inside the extruder and subsequent expansion.

4. Method according to any one of claims 1 to 3, **characterised in that** forming is carried out at a temperature higher than the glass transition temperature of isomalt, which is 40°C, by thermoforming by injection, after passing through the die and cropping, or simply by pouring into moulds having the required shape for the envisaged application, the forming step being carried out at a constant temperature so that the treated material has a uniform water content and crystallinity.

5. Method according to claim 4, **characterised in that** forming is carried out at a temperature of 80°C to 95°C.

6. Method according to any one of claims 1 to 5, **characterised in that** it also includes a glazing step by evaporation of a food glaze, in particular one that is colourless.

7. Method according to any one of claims 1 to 6, **characterised in that** the food material essentially consisting of isomalt is flavoured and/or coloured.

8. Method according to any one of claims 1 to 7, **characterised in that** the material obtained is used as a container for any kind of filling, cold or frozen, savoury or sweet.
